Europäisches Patentamt

European Patent Office

Office européen des brevets

(11) Publication number: **0 061 825**
**B1**

# EUROPEAN PATENT SPECIFICATION

(45) Date of publication of patent specification: **10.07.85**

(21) Application number: **82300556.6**

(22) Date of filing: **03.02.82**

(51) Int. Cl.⁴: **B 60 R 22/00**

(54) Clamping means for a strap.

(30) Priority: **14.02.81 GB 8104672**
**31.03.81 GB 8110054**

(43) Date of publication of application:
**06.10.82 Bulletin 82/40**

(45) Publication of the grant of the patent:
**10.07.85 Bulletin 85/28**

(84) Designated Contracting States:
**DE FR GB IT**

(56) References cited:
**CH-A- 480 204**
**US-A-3 533 659**
**US-A-4 300 731**

(73) Proprietor: **BRITAX (WINGARD) LIMITED**
**Chandler Road**
**Chichester Sussex, PO19 2UG (GB)**

(72) Inventor: **Cunningham, Douglas James**
**"Sambourne" 4 Church Close Dunton Bassett**
**Lutterworth Leicestershire, LE16 5JY (GB)**
Inventor: **Mack, John Edward**
**12 Naseby Road**
**Solihull West Midlands (GB)**

(74) Representative: **Hollinghurst, Antony**
**Britax Central Services 40 Granby Avenue**
**Garretts Green Birmingham, B33 OSJ (GB)**

Courier Press, Leamington Spa, England.

## Description

This invention relates to clamping means for a strap and has particular application to the provision of clamping means for a vehicle safety belt system incorporating an automatic retractor or inertia reel.

Locking mechanisms for safety belt retractors of the inertia reel type commonly operate to lock the spindle of the retractor. With this arrangement, it is usual to find that an undesirably large length of strap is paid out after the spindle has locked, due to tightening of the coils of webbing wound on the spindle. GB—A—1236051 discloses a mechanism for clamping the strap or webbing directly. However, even when the clamp is released, the webbing is constrained to follow a relatively high-friction path, with the result that an electric motor is required not only to retract the strap but also to protract it. The present invention aims to provide clamping means acting directly on the strap while minimising the friction on the strap when the clamp is released.

According to the invention, means for clamping a strap comprises a pair of parallel spaced rungs secured to a carrier which is mounted on bearing means for angular and translational movement, the bearing means being so arranged that translational movement of the carrier caused by tension applied to a strap passing between the rungs causes angular movement of the carrier from a first position to a second position in which the proportion of the rungs which is in frictional engagement with the strap is increased, the resulting increase in path length of the strap around the rungs being less than the movement of the rungs in the direction of the applied tension due to the translational movement of the carrier.

Preferably, the angular movement is arranged to be sufficient to bring the part of the strap leading from one of the rungs to the location at which the tension is applied, into frictional engagement with the exposed surface of the part of the strap which is wrapped around the other rung.

Embodiments of the invention will now be described by way of example, with reference to the accompanying drawings in which:

Figure 1 is a schematic sectional view of a clamping device in accordance with one embodiment of the invention, in its released position,

Figure 2 is a view similar to Figure 1 showing the clamping device after completion of a first phase of locking,

Figure 3 is a view, similar to Figures 1 and 2, showing the clamping device in its fully locked position,

Figure 4 is a perspective view of the rungs and carrier of the clamping device shown in Figures 1 to 3,

Figure 5 is a sectional view, taken on the longitudinal centre line, of a clamping device in accordance with another embodiment of the invention, in its released position,

Figure 6 is a view similar to Figure 5, showing the clamping device in an intermediate position,

Figure 7 is a view similar to Figures 5 and 6, showing the clamping device in its fully locked position,

Figure 8 is a plan view of a clamping device in accordance with a further embodiment of the invention, showing the clamping device in its released position,

Figure 9 is a sectional view taken on the line 9—9 in Figure 8,

Figure 10 is a sectional view similar to Figure 9, showing the clamping device in an intermediate position,

Figure 11 is a sectional view similar to Figures 9 and 10 showing the clamping device in its fully locked position,

Figure 12 is a side view of a clamping device in accordance with yet another embodiment of the invention in its released position,

Figure 13 is a sectional view taken on the line 13—13 in Figure 12,

Figure 14 is a sectional view similar to Figure 13 showing the clamping device in a first intermediate position,

Figure 15 is a sectional view similar to Figures 13 and 14 showing the clamping device in a second intermediate position, and

Figure 16 is a cross-sectional view similar to Figures 13, 14 and 15 showing the clamping device in its fully locked position.

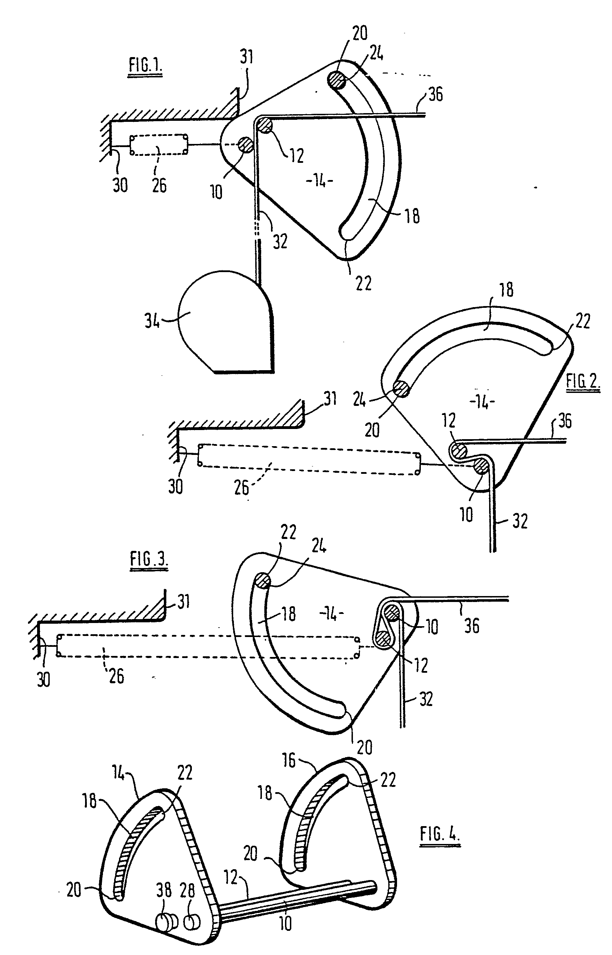

Referring to Figures 1 to 4, a clamping device in accordance with the invention comprises a pair of rungs 10 and 12, mounted on two side plates 14 and 16, the rungs and side plates together forming a carrier member. Each of the side plates 14 and 16 has a slot 18 extending therethrough. The slots 18 follow a spiral path, their ends 20 being nearer to the rung 10 than their ends 22.

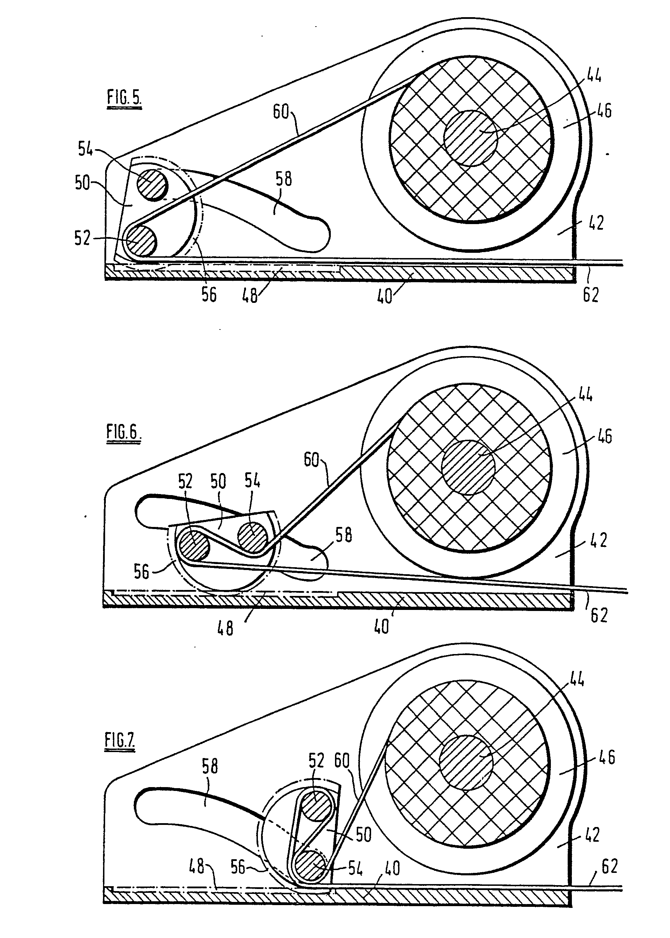

Referring particularly to Figures 1 to 3, a fixed rod 24 extends through the slots 18, in both side members 14 and 16. A tension spring 26 connects a projection 28 (Figure 4) on one end of the rung 10 to a location 30 which is fixed relative to the rod 24 so as to hold the side plates 14 and 16 in contact with a stop 31. A strap 32, forming part of a vehicle safety belt system, is led from a retractor 34, between the rungs 10 and 12. Its free end 36 is attached to or itself forms the harness part (not shown) of the safety belt system.

When the clamping device is in its released position, as shown in Figure 1, the strap 32 is led round the rung 12 and is in light frictional engagement with the rung 10. In this condition, it can be gently withdrawn from the retractor 34, the spring 26 being chosen to hold the side plates 14 and 16 firmly in contact with the stop 31 against the force exerted on the rung 12 due to the retractor spring. If the retractor 34 locks to prevent protraction of the strap 32 therefrom, further tension in the end 36 produces a force on the rung 12 tending to rotate it about the fixed rod 24, overcoming the spring 26. This angular movement increases the friction between the strap 32 and the rung 10 and the clamping device takes up the position illustrated in Figure 2.

If the rod 24 merely extended through holes in the side plates 14 and 16, it would not be able to rotate much further than the position illustrated in Figure 2. However, since the rod 24 extends through the slots 18, continued tension on the strap end 36 tends to move the rung 12 further to the right, as viewed in the drawings. This causes the side plates 14 and 16 to move relative to the rod 24 until the latter is located at the other end 22 of each of the slots 18, as illustrated in Figure 3. It will be seen that the strap 32 is now thoroughly entrained round the rungs 10 and 12 and the free end 36 thereof bears down on the part of the strap 32 which is entrained around the rung 10, thereby achieving an efficient clamped condition. The end of the spring 26 adjacent to the peg 28 is entrained round a pulley 38 (Figure 4) formed on the adjacent end of the rung 12. The effect of this is to ensure that, when the clamp releases on reduction of tension in the strap end 36, the rod 24 moves back to the end 20 of each of the slots 18 before the carrier rotates back to the angular position illustrated in Figure 1.

When a clamping device of the foregoing type is used, very little load is placed on the locking mechanism of the retractor 34. In fact, if a strap-sensitive locking action alone is required, the spool of the retractor 34 can be arranged to have sufficient inertia to initiate the clamping action. If a vehicle-sensitive locking action is required, the mechanism may take the form of a friction brake acting on the spindle of the retractor. Alternatively, separate means for initiating the first phase of the locking action may be arranged to act directly on the carrier for the two rungs 10 and 12.

It has been assumed that the retractor 34 is mounted at a sufficient distance from the plates 16 and 18 for the angle of the strap 32 therebetween not to vary greatly during the clamping action. It will be appreciated that if the retractor 34 is closer to the clamping device and the orientations illustrated in Figure 1 are preserved, the change in angle of the strap 32 between the retractor 34 and the clamping device will serve to increase the clamping action.

In Figures 1 to 4, the strap end 36 is shown at right angles to the direction at which the strap 32 emerges from the retractor 34. The invention can also be used with other configurations, the only requirement being that, in the unclamped position, the strap 32 is deflected from the straight line path to the retractor 34 by a sufficient distance to permit initiation of the first phase of the clamping action.

Figures 5 to 7 illustrate another form of clamping device in accordance with the invention, incorporated into a reel. The device comprises a frame having a base 40 with two parallel side flanges, of which only the flange 42 is visible in the drawings. A reel comprising a shaft 44 and end flanges 46 is mounted between the side flange 42 and the corresponding side flange on the other side of the base 40. A rewind spring (not shown) biases the shaft 44 in the clockwise direction, as viewed in Figures 5 to 7.

In accordance with the invention a series of gear teeth, forming a rack 48 are cut in the base 40. A pair of side plates 50, between which a pair of rungs 52 and 54 extend, have gear segments 56 forming part of their peripheries, the gear segments 56 engaging with the rack 48. The ends of the rung 54 project beyond the side plates 50 through slots 58 in the flange 42 and the corresponding flange on the other side of the base member. The slots 58 are shaped in accordance with the trajectory of the ends of the rung 54 as the gear segments 56 move along the rack 48. Spring means (not shown) are connected to the projecting ends of the rung 54 so as to bias it towards the ends of the slots 58 further from the shaft 44.

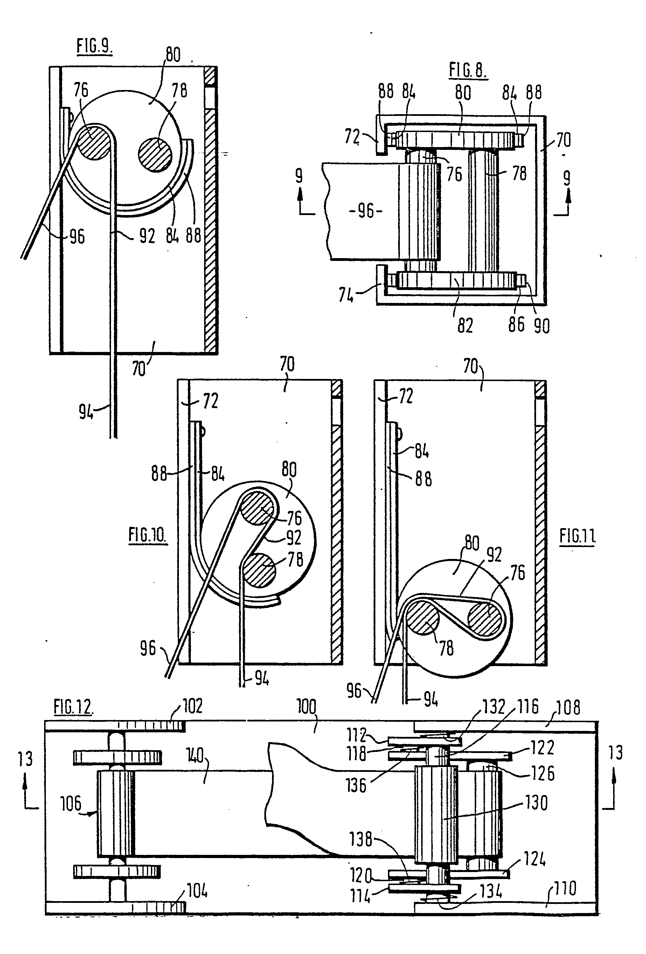

Referring particularly to Figure 5, webbing 60, forming part of a safety belt system is led off the shaft 44 and round the rung 52 so that its free end 62 emerges from the reel between the shaft 44 and the base 40. Provided that the webbing is not jerked, it can be freely withdrawn from the shaft 44. If the free end 62 is subject to a sudden jerk, the inertia of the shaft 44 and its flanges 46 is sufficient to overcome the bias of the spring means (not shown) against the rung 54. The result is that the carrier tends to move along the rack 48, the engagement of the gear segments 56 therewith causing the carrier to rotate at the same time. Almost immediately the rung 54 engages with the webbing 60 between the rung 52 and the shaft 44, increasing the friction and thus increasing the tendency for the carrier to move rather than the webbing slip round the rungs. This movement continues until the carrier has taken up the position shown in Figure 7 with two layers of webbing round the outer end of the rung 54. Any slippage would require these two layers to move in opposite directions, with the result that the webbing is firmly locked against further withdrawal.

In order to reduce the amount of webbing paid out during locking, the segments 56 are preferably not circular but have a zone of reduced radius between their two end regions. The result of this is to reduce the distance of the rung 52 from the base 40, which determines the reeling radius controlling pay-out, when the carrier is in the position shown in Figure 6.

Instead of relying on the inertia of the shaft 44 and its flanges 46 to initiate the clamping action, a conventional strap-sensitive locking mechanism may be coupled thereto. However, it will be realised that any such locking mechanism is merely required to initiate the clamping action and does not have to take full crash loads.

In order to provide vehicle-sensitive locking, a vehicle-responsive intertia sensor may be arranged to apply a brake to the shaft 44 with sufficient resistance to overcome the bias of the spring means acting on the rung 54. When such a brake is applied, any withdrawal of webbing will initiate locking regardless of the speed of withdrawal.

Figures 8 to 11 show a clamping device in accordance with the invention comprising a channel-section support member 70 having flanges 72 and 74 overhanging the channel opening. A pair of rungs 76 and 78 are mounted on circular side plates 80 and 82 which are located in the channel member 70 between the base thereof and the flanges 70 and 72 respectively.

Each of the side plates 80 and 82 is connected to one end of a respective webbing strap 84 and 86 which has its other end attached to the corresponding flanges 72, 74 and, when the device is in the position shown in Figures 8 and 9, extends about half way round the periphery of the corresponding side plate 80, 82. A respective length of spring steel strip 88, 90 extends round the outside of the corresponding strap 84, 86 and is tensioned so as to maintain the device in the position shown in Figures 8 and 9. One end of each spring steel strip 88, 90 is secured to the corresponding flange 72, 74 of the support member 70 but the other end is left free so as not to be in tension when the clamping device is in its fully locked position, as will be explained hereinafter.

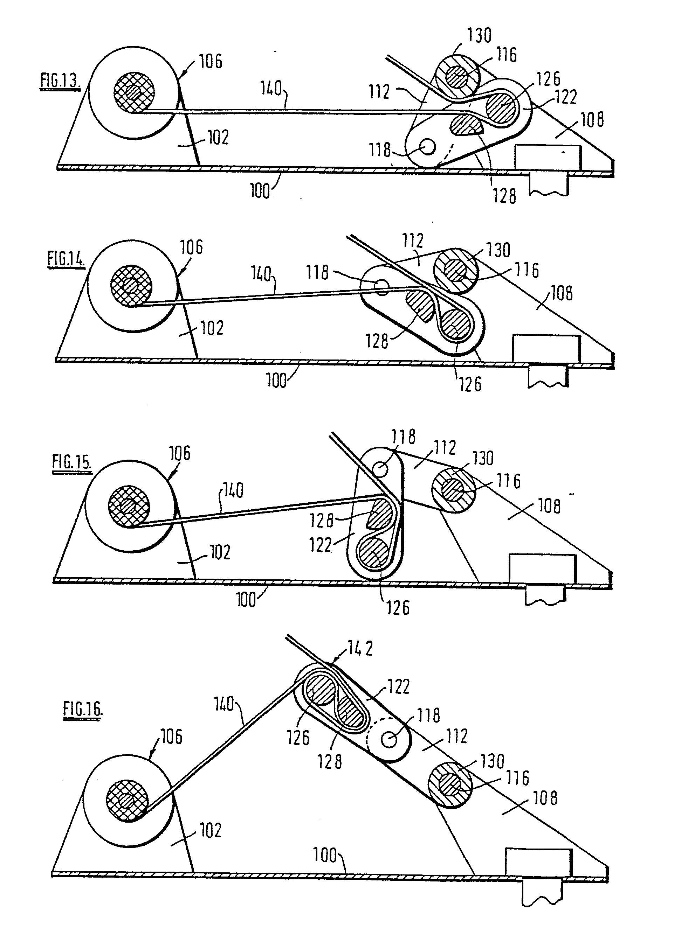

A length of webbing 92 has one end 94 connected to a retractor (not shown) and the other end 96 connected to or itself forming part of a harness (not shown) of a safety belt system. When the clamping device is in its released position as shown in Figures 8 and 9, the webbing 92 is led round the rung 76 but makes no contact with the rung 78. In normal use, although the tension in the webbing 92 is sufficient to cause some angular movement of the rungs 76 and 78 against the action of the spring strips 88 and 90, this movement is insufficient to bring the rung 78 into contact with the webbing 92. However, if the retractor locks, with the result that the tension in the webbing 92 increases, further angular movement of the rungs 76 and 78 takes place and the rung 78 makes contact with the webbing 92 as shown in Figure 10. Further tension causes yet more angular movement of the rungs 76 and 78, and as this angular movement takes place, the friction between the webbing 92 and the rungs 76 and 78 increases until the device reaches its fully locked position shown in Figure 11. The load on the safety belt system is then transmitted to the support member 70 by the straps 84 and 86. When the tension in the safety belt system is released, the spring strips 88 and 90 restore the clamping device to its released position.

In a further embodiment of the invention (not shown), the plates 80 and 82 of the latter embodiment, have centrally located pins extending into straight slots combining some of the feature of the embodiments of Figures 5 to 7 and Figures 8 to 11, of the side walls of the channel member 70. The plates themselves have gear segments formed in at least part of their peripheries to engage with a rack formed in the base of the channel member in a similar manner to the embodiment of Figures 5 to 7. The straps 84 and 86 are then omitted and the spring strips 88 and 90 replaced by tension springs coupling such pivot pins to locations on the upper end of the channel member 70.

Figures 12 to 16 show a clamping device having a support member 100 having a pair of opposed side flanges 102 and 104 carrying a retractor reel 106, and a second pair of opposed side flanges 108 and 110 carrying a clamping device in accordance with the invention. The links 112 and 114 are pivotally supported on a shaft 116 which extends between the flanges 108 and 110. At their free ends, the links 112 and 114 are connected by respective pivot pins 118 and 120 to side plates 122 and 124 which are interconnected by two spaced parallel rungs 126 and 128. The shaft 116 also carries a roller 130 located between the side plates 126 and 128.

As shown in Figure 12, spring means 132 and 134 are provided at the shaft 116 to bias the links 112 and 114 in the anticlockwise direction (as viewed in Figures 13 to 16). Similar spring means 136 and 138 are provided at the pivot pin 118 and 120 to bias the side plates 122 and 124 in the same direction.

A length of webbing 140 is wound on the retractor 106 and has its free end fed between the rung 128 and the roller 130, then round the rung 126 and back between the rung 128 of the roller 130. This free end is then attached to or forms part of a harness of a safety belt system.

When the clamping device is in its released position shown in Figure 13, webbing can be freely drawn off the retractor 106, the springs 132 and 138 being sufficient to resist any tendency to cause displacement of the rungs 126 and 128. If the tension in the webbing 140 increases, for example because the retractor 106 locks, the rungs 126 and 128 are moved in a clockwise direction, the links 112 and 114 pivot about the shaft 116 and the side plates 122 and 124 subsequently pivot about their pivot pins 118 and 120 as the clamping device moves to the position shown in Figure 14, then to the position shown in Figure 15 and finally to the position shown in Figure 16 in which the webbing 140 wound round both rungs 126 and 128 and thereby firmly clamped. It will be appreciated that the precise relationship between the movement of the links 112 and 114 and that of the side plates 122 and 124 depends on the force exerted by the springs 132 and 134 relative to that exerted by the springs 136 and 138. When the excess tension is released, these springs return the clamping device to its released position as shown in Figure 13.

The provision of the roller 130 makes it possible for the rung 126 to be allowed to go over-centre relative to the shaft 116 and thus minimizes contact between the webbing 140 and the rung 128 when the clamping device is released. Similarly, the flattened surface of one side of the rung 128 permits the free end of the webbing 140 to come into contact at 142, with the webbing bound round the rung 126 at an earlier stage than would otherwise have been the case. In other words, these two expedients maximize the amount of angular movement achieved for a particular extent of payout of the belt as the links 112 and 114 of the side plates 122 and 124 straighten out to the position shown in Figure 16.

In any of the embodiments of the invention, the retractor may be mounted remote from the clamping device in accordance with the invention. The retractor need not necessarily be a reel.

## Claims

1. Clamping means for a strap having a pair of parallel spaced rungs (10, 12) secured to a carrier (14, 16) which is mounted on bearing means (18, 24) for angular and translational movement, the bearing means (18, 24) being so arranged that translational movement of the carrier (14, 16) caused by tension applied to a strap (36) passing between the rungs (10, 12) causes angular movement of the carrier (14, 16) from a first position to a second position in which the proportion of the rungs (10, 12) which is in frictional engagement with the strap (36) is increased, the resulting increase in path length of the strap (36) around the rungs (10, 12) being less than the movement of the rungs (10, 12) in the direction of the applied tension due to the translational movement of the carrier (14, 16).

2. Clamping means according to claim 1, wherein the angular movement of the carrier (14, 16) into its second position is arranged to be sufficient to bring the part of the strap (36) leading from one of the rungs (12) to the location at which the tension is applied, into frictional engagement with the exposed surface of the part of the strap which is wrapped around the other rung (10).

3. Clamping means according to claim 1 or 2, further comprising spring means (26) for biasing the carrier (14, 16) into its first position.

4. Clamping means according to claim 1, 2 or 3, wherein the carrier comprises a pair of side members (14, 16) held parallel to one another by the rungs (10, 12) which extend therebetween, each side member (14, 16) having an arcuate slot (18) following a spiral path relative to the rungs, and the bearing means comprises pivot means (24) engaging in each arcuate slot (18) to support the carrier (14, 16), whereby the carrier (14, 16) pivots on the pivot means (24) which remain at one end of the slot (18) during the first phase of movement from the first position of the carrier and which move along the slot (18) during a second phase of movement to the second position of the carrier.

5. Clamping means according to claim 1, 2 or 3, wherein the carrier (50) comprises gear segments (56) and the bearing means comprises a stationary rack (48) together with means for maintaining the gear segments (56) in engagement with the rack (48).

6. Clamping means according to claim 5, wherein the distance of the gear teeth (56) from the mid-point between the rungs (52, 54) is greater in a direction parallel to a line through said rungs (52, 54) than in a direction perpendicular to said line.

7. Clamping means according to claim 5 or 6, wherein the means for maintaining the gear segments (56) in engagement with the rack (48) comprises guide pins (54) projecting from the carrier (50) into slots (58) in side members (42) coupled to the rack (48).

8. Clamping means according to claim 1, 2 or 3, wherein the carrier comprises a pair of side plates (80, 82) held parallel to one another by the rungs (76, 78) which extend therebetween, at least part of the periphery of each plate (80, 82) comprising an arcuate drum surface for receiving a respective flexible coupling element (84, 86) one end of which is connected to the corresponding plate (80, 82) and the other end of which is connected to the bearing means (72, 74) the plates (80, 82) rolling on the bearing means (72, 74) during movement of the carrier between its first and second positions.

9. Clamping means according to claim 8, further comprising spring strip means (88, 90) associated with each flexible coupling element (84, 86) and arranged to bias such coupling element (84, 86) into a position wrapped around said drum surface.

10. Clamping means according to claim 1, 2 or 3, wherein the carrier comprises a pair of side plates (122, 124) held parallel to one another by rungs (126, 128) which extend therebetween and the bearing means comprises a pair of links (112, 114) each having one end pivotally connected to a respective side plate (122, 124) and the other end pivotally connected to a support member (108, 110), a line joining the pivotal connections (116, 118) at each end of the links (112, 114) forming an acute angle with a line joining the rungs (126, 128) when the carrier is in its first position, said angle increasing as the carrier moves towards its second position.

11. Clamping means according to claim 10, wherein spring means (132—138) are provided in the pivotal connections at both ends of each link (122, 124) to bias the carrier into its first position.

12. Clamping means according to claim 10 or 11, further comprising a roller (130) mounted on the pivotal connection (116) between the links (112, 114) and the support member (108, 110), the strap (140) engaging with the roller (130) when the carrier is in its first position.

## Patentansprüche

1. Gurtklemmittel gekennzeichnet durch ein Paar parallele, voneinander beabstandete Sprossen (10, 12), die in einem Rahmen (14, 16) befestigt sind, der zum Ausüben einer Drehbewegung sowie einer translatorischen Bewegung auf Lagerelementen (18, 24) angebracht ist, wobei die Lagerelemente (18, 24) derart angeordnet sind, daß die translatorische Bewegung des Rahmens (14, 16), die durch eine auf einen zwischen den Sprossen (10, 12) hindurchlaufenden Gurt (36) ausgeübte Zugkraft bewirkt wird, zu einer Drehbewegung des Rahmens (14, 16) aus einer ersten Stellung in eine zweite Stellung führt, in der der Umfangsanteil der Sprossen (10, 12), der in Reibschluß mit dem Gurt (36) steht, erhöht wird, wobei die sich daraus ergebende größere Weglänge des Gurts (36) um die Sprossen (10, 12) kleiner ist als die aufgrund der translatorischen Bewegung des Rahmens (14, 16) vollführte Bewegung der Sprossen (10, 12) in Richtung der auf sie ausgeübten Zugkraft.

2. Gurtklemmittel nach Anspruch 1, dadurch gekennzeichnet, daß die Schwenkbewegung des Rahmens (14, 16) in dessen zweite Stellung ausreichend gestaltet ist, um den Teil des Gurtes (36), der von einer der Sprossen (12) zu dem Ort führt, an dem die Zugkraft aufgegeben wird, in reibungsbehafteten Eingriff mit der ihr ausgesetzten Fläche des Gurtteils zu bringen, der um die andere Sprosse (10) gewickelt ist.

3. Gurtklemmittel nach einem der Ansprüche 1 oder 2, gekennzeichnet durch ein Federelement (26), das den Rahmen (14, 16) in seine erste Stellung vorspannt.

4. Gurtklemmittel nach einem der Ansprüche 1 bis 3, dadurch gekennzeichnet, daß der Rahmen aus einem Paar Seitenteile (14, 16) besteht, die durch die sich zwischen ihnen erstreckenden Sprossen (10, 12) parallel zueinander gehalten werden, wobei jedes Seitenteil (14, 16) einen gekrümmten Schlitz (18) aufweist, der bezüglich der Sprossen spiralförmig verläuft, und wobei die Lagerelemente einen Drehzapfen (24) aufweisen, der in jeden gekrümmten Schlitz (18) eingreift, um den Rahmen (14, 16) zu halten, wodurch der Rahmen (14, 16) sich während der ersten Bewegungsphase aus der ersten Stellung des Rahmens um den Drehzapfen (24) verschwenkt, der in einem Ende des Schlitzes (18) verharrt und der sich während einer zweiten Bewegungsphase entlang des Schlitzes (18) in die zweite Stellung des Rahmens bewegt.

5. Gurtklemmittel nach einem der Ansprüche 1 bis 3, dadurch gekennzeichnet, daß der Rahmen (50) eine Verzahnung (56) aufweist und daß das Lagerelement eine feststehende Zahnstange (48) besitzt sowie eine Einrichtung, mittels der die Verzahnung (56) in Eingriff mit der Zahnstange (48) gehalten wird.

6. Gurtklemmittel nach Anspruch 5, dadurch gekennzeichnet, daß der Abstand der Verzahnung (56) vom Mittelpunkt zwischen den Sprossen (52, 54) in einer parallel zu einer Geraden durch die Sprossen (52, 54) verlaufenden Richtung größer ist als in einer rechtwinklig zu dieser Geraden verlaufenden Richtung.

7. Gurtklemmittel nach Anspruch 5 oder 6, dadurch gekennzeichnet, daß die Einrichung zum Ineingriffhalten der Verzahnung (56) mit der Zahnstange (48) aus Führungszapfen (54) besteht, die aus dem Rahmen (50) heraus in Schlitze (58) hineinragen, die in den mit der Zahnstange (48) verbundenen Seitenteilen (42) ausgebildet sind.

8. Gurtklemmittel nach einem der Ansprüche 1 bis 3, dadurch gekennzeichnet, daß der Rahmen aus einem Paar von Seitenplatten (80, 82) besteht, die durch die sich zwischen diesen erstreckenden Sprossen (76, 78) parallel zueinander gehalten werden, wobei mindestens ein Teil des Umfangs jeder Platte (80, 82) eine gekrümmte Wälzenfläche zur Aufnahme eines entsprechenden, flexiblen Verbindungselements (84, 86) besitzt, dessen eines Ende mit der zugehörigen Platte (80, 82) und dessen anderes Ende mit den Lagerelementen (72, 74) verbunden ist, wobei die Platten (80, 82), während der Bewegung des Rahmens zwischen seiner ersten und seiner zweiten Stellung, auf den Lagerelementen (72, 74) abrollen.

9. Gurtklemmittel nach Anspruch 8, gekennzeichnet durch Federstreifenelemente (88, 90), die jedem flexiblen Verbindungselement (84, 86) zugeordnet und derart ausgebildet sind, daß sie dieses Verbindungselement (84, 86) in eine um die Walzenfläche geschlungene Stellung vorspannen.

10. Gurtklemmittel nach einem der Anspüche 1 bis 3, dadurch gekennzeichnet, daß der Rahmen aus einem Paar von Seitenplatten (122, 124) besteht, die durch sich zwischen diesen erstreckende Sprossen (126, 128) parallel zueinander gehalten werden, und daß das Lagerelement ein Paar Auslegerarme (112, 114) aufweist, deren eines Ende jeweils mit der entsprechenden Seitenplatte (122, 124) und deren anderes Ende drehbar mit einem Trägerteil (108, 110) verbunden ist, wobei eine die Drehverbindungen (116, 118) jedes Endes der Auslegerarme (112, 114) verbindende Gerade einen spitzen Winkel mit einer die Sprossen (126, 128) verbindende Gerade bildet, wenn der Rahmen sich in seiner ersten Stellung befindet, und sich der Winkel vergrößert, wenn sich der Rahmen in Richtung seiner zweiten Stellung bewegt.

11. Gurtklemmittel nach Anspruch 10, dadurch gekennzeichnet, daß Federelemente (132, 134, 136, 138) an den Drehverbindungen beider Enden jedes Auslegerarmes (122, 124) vorgesehen sind, um den Rahmen in seine erste Stellung vorzuspannen.

12. Gurtklemmittel nach Anspruch 10 oder 11, gekennzeichnet durch eine Walze (130), die an der Drehverbindung (116) zwischen den Auslegerarmen (112, 114) und dem Trägerteil (108, 110) angebracht ist, wobei der Gurt (140) in Eingriff mit der Walze (130) steht, wenn sich der Rahmen in seiner ersten Stellung befindet.

## Revendications

1. Dispositif de blocage de sangle ayant deux tringles parallèles, espacées (10, 12) fixées à un support (14, 16) qui est monté sur un moyen de soutien (18, 24) en vue d'un mouvement angulaire et de translation, le moyen de soutien (18, 24) étant agencé de telle façon que le mouvement de translation du support (14, 16) provoqué par la tension appliquée à une sangle (36) passant entre les tringles (10, 12) provoque un mouvement angulaire du support (14, 16) d'une première position vers une seconde position dans laquelle la proportion des tringles (10, 12) en contact de friction avec la sangle (36) est accrue, l'augmentation résultante dans la longueur de trajet de la sangle (36) autour des tringles (10, 12) étant inférieure au mouvement des tringles (10, 12) dans la direction de tension appliquée en raison du mouvement de translation du support (14, 16).

2. Dispositif de blocage selon la revendication 1, dans lequel le mouvement angulaire du support (14, 16) dans sa seconde position est réalisé pour être suffisant afin d'amener la partie de la sangle (36) partant d'une des tringles (12) à l'endroit où la tension est appliquée, en contact de friction avec la surface exposée de la partie de la sangle qui est enroulée autour de l'autre tringle (10).

3. Dispositif de blocage selon l'une des revendications 1 ou 2, comprenant, en outre, un moyen élastique (26) pour pousser le support (14, 16) dans sa première position.

4. Dispositif de blocage selon l'une quelconque des revendications 1 à 3, dans lequel le support comprend deux éléments latéraux (14, 16) maintenus en parallèle l'un par rapport à l'autre par les tringles (10, 12) qui s'étendent entre eux, chaque élément latéral (14, 16) ayant une fente arquée (18) suivant un trajet en spirale par rapport aux tringles, et le moyen de soutien comprend un moyen de pivotement (24) venant en contact dans chaque fente arquée (18) pour soutenir le support (14, 16) de sorte que le support (14, 16) pivote sur le moyen de pivotement (24) qui reste à une extrémité de la fente (13) pendant la première phase de mouvement à partir de la première position du support et qui se déplace le long de la fente (18) pendant une seconde phase de mouvement vers la seconde position du support.

5. Dispositif de blocage selon l'une quelconque des revendications 1 à 3, dans lequel le support (0) comprend des segments dentés (56) et le moyen de soutien comprend une crémaillère fixe (48) avec un moyen pour maintenir les segments dentés (56) en contact avec la crémaillère (48).

6. Dispositif de blocage selon la revendication 5, dans lequel la distance des segments dentés (56) à partir du point médian entre les tringles (52, 54) est plus grande dans une direction parallèle à une ligne traversant lesdites tringles (52, 54) que dans une direction perpendiculaire à ladite ligne.

7. Dispositif de blocage selon l'une des revendications 5 ou 6, dans lequel le moyen pour maintenir les segments dentés (56) en contact avec la crémaillère (48) comprend des tiges de guidage (54) faisant saillie du support (50) dans les fentes (58) des éléments latéraux (42) couplés à la crémaillère (48).

8. Dispositif de blocage selon l'une quelconque des revendications 1 à 3, dans lequel le support comprend deux plaques latérales (80, 82) maintenues parallèles l'une à l'autre par des tringles (76, 78) qui s'étendent entre elles, au moins une partie de la périphérique de chaque plaque (80, 82) comprenant une surface de tambour arquée pour recevoir un élément de couplage souple respectif (84, 86) dont une extrémité est reliée à la plaque correspondante (80, 82) et dont l'autre extrémité est reliée au moyen de soutien (72, 74), les plaques (80, 82) roulant sur le moyen de soutien (72, 74) pendant le mouvement du support entre sa première et sa seconde position.

9. Dispositif de blocage selon la revendication 8, comprenant, en outre, des bandes élastiques (88, 90) associées à chaque élément de couplage souple (84, 86) et agencées pour pousser un tel élément de couplage (84, 86) dans une position enroulée autour de ladite surface de tambour.

10. Dispositif de blocage selon l'une quelconque des revendications 1 à 3, dans lequel le support comprend deux plaques latérales (122, 124) maintenues parallèles l'une à l'autre par des tringles (126, 128) qui s'étendent entre elles et le moyen de soutien comprend deux biellettes (112, 114) ayant chacune une extrémité articulée à une plaque latérale respective (122, 124) et l'autre extrémité articulée à un élément d'appui (108, 110), une ligne joignant les articulations (116, 118) à chaque extrémité des biellettes (112, 114) formant un angle aigu avec une ligne joignant/les tringles (126, 128) quand le support est dans sa première position, ledit angle augmentant lorsque le support se déplace vers sa seconde position.

11. Dispositif de blocage selon la revendication 10, dans lequel des moyens élastiques (132—138) sont prévus dans les articulations aux deux extrémités de chaque biellette (122, 124) pour pousser le support dans sa première position.

12. Dispositif de blocage selon l'une des revendications 10 ou 11, comprenant, en outre, un galet (130) monté sur l'articulation (116) entre les biellettes (112, 114) et l'élément d'appui (108, 110), la sangle (140) venant au contact du galet (130) quand le support est dans sa première position.

FIG.1.

FIG.2.

FIG.3.

FIG.4.

FIG. 5.

54
50
52
60
58
44
46
42
56 48 40 62

FIG. 6.

52 50 54
60
58
44
46
42
56
48 40 62

FIG. 7.

58
52 60
50
44
46
42
48 56 54 40 62

2

FIG.9.

FIG.8.

FIG.10.

FIG.11

FIG.12.

0 061 825

FIG.13.

FIG.14.

FIG.15.

FIG.16.

4